# EUROPÄISCHE PATENTANMELDUNG

(11) **EP 2 520 769 A1**
(43) Veröffentlichungstag der Anmeldung: **07.11.2012**
(21) Anmeldenummer: 11164425.8
(22) Anmeldetag: 02.05.2011
(51) Int. Cl.: F01D 17/16, F04D 29/56, F04D 29/64

(54) **Innenring zur Bildung eines Leitschaufelkranzes, Leitschaufelkranz und Strömungsmaschine**

(71) Anmelder: MTU Aero Engines GmbH, 80995 München (DE)
(72) Erfinder: Stiehler, Frank, 04924, Bad Liebenwerda (DE)

(57) **Zusammenfassung**

Offenbart ist ein Innenring zur Bildung eines Leitschaufelkranzes für eine Strömungsmaschine, der aus zumindest zwei einteiligen Ringsegmenten mit einer Vielzahl von umfangsseitig geschlossenen Öffnungen zur Aufnahme von schaufelseitigen Lagerzapfen zusammengesetzt ist und dessen Außendurchmesser mindestens 12 mal so groß wie seine Höhe ist, sowie ein Leitschaufelkranz mit einem derartigen Innenring und einer Strömungsmaschine mit einem derartigen Leitschaufelkranz.

## Beschreibung

Die Erfindung betrifft einen Innenring zur Bildung eines Leitschaufelkranzes für eine Strömungsmaschine nach dem Oberbegriff des Patentanspruchs 1, einen Leitschaufelkranz mit einem derartigen Innenring und eine Strömungsmaschine mit einem derartigen Leitschaufelkranz.

Strömungsmaschinen wie Flugzeugtriebwerke haben zur Einstellung optimaler Betriebsbedingungen regelmäßig zumindest eine verdichterseitige verstellbare Leitschaufelreihe mit einer Vielzahl von um ihre Hochachse verschwenkbaren Leitschaufeln. Die Leitschaufelreihe bildet mit einem einen Rotorabschnitt umgreifenden ortsfesten Innenring einen sogenannten Leitschaufelkranz. Der Innenring dient zur inneren Lagerung der Leitschaufeln und weist eine Vielzahl von radialen Öffnungen zur Aufnahme jeweils eines schaufelseitigen Lagerzapfens auf. In der DE 10 2006 024 085 A1 wird vorgeschlagen, den Innenring aus zumindest zwei halbkreisförmigen Ringsegmenten mit in axialer Richtung ungeteilten und somit umfangsseitig geschlossenen Öffnungen zu bilden und diese einzeln über den Lagerzapfen der in Gehäusehälften montierten Laufschaufeln abzurollen. Hierzu werden die Ringsegmente auf einen konstanten Spannradius vorgespannt, im Bereich der Lagerzapfen positioniert und dann entspannt. Eine Demontage des Innenrings bzw. des Leitschaufelkranzes erfolgt auf analoge Art und Weise. Die Verformung und Positionierung der Innenringsegmente erfolgt über eine in der DE 10 2009 004 934 A1 gezeigte Spannvorrichtung. Zur Ermöglichung einer derartigen Montage und Demontage sind jedoch besondere geometrische bzw. topologische Bedingungen des Innenringes und der Leitschaufeln einzuhalten.

Aufgabe der Erfindung ist es, einen Innenring zur Bildung eines Leitschaufelkranzes für eine Strömungsmaschine zu schaffen, der eine einfache Montage und Demontage eines Leitschaufelkranzes ermöglicht. Zudem ist es Aufgabe der Erfindung, einen einfach zu montierenden und demontierenden Leitschaufelkranz und eine montage- und wartungsoptimierte Strömungsmaschine zu schaffen.

Diese Aufgabe wird gelöst durch einen Innenring mit den Merkmalen des Patentanspruchs 1, durch einen Leitschaufelkranz mit den Merkmalen des Patentanspruchs 4 und durch eine Strömungsmaschine mit den Merkmalen des Patentanspruchs 10.

Ein erfindungsgemäßer Innenring zur Bildung eines Leitschaufelkranzes für eine Strömungsmaschine mit einer Vielzahl von Leitschaufeln hat einen Außendurchmesser D_AR und eine Höhe H_R und setzt sich aus mindestens zwei Ringsegmenten zusammen, die eine Vielzahl von umfangsseitig geschlossenen Öffnungen zur Aufnahme von Lagerzapfen der Leitschaufeln aufweisen. Erfindungsgemäß gilt die Beziehung D_AR / H_R ≥ 12.

Die Beziehung erlaubt bei einem gegebenen Ringaußendurchmesser die Einstellung einer maximalen Ringhöhe. Ein nach dieser Beziehung ausgelegter Innenring lässt sich zumindest bei Verwendung von für Flugzeugtriebe etablierten Werkstoffen einfach und wiederholbar montieren und demontieren. Insbesondere wird bei der Montage und Demontage ein ungewollter Verzug der Ringsegmente verhindert. Beispielhafte Materialien sind z.B. Werkstoffe auf Nickelbasis, wie z.B. Inco718, In625, Chromnickelstähle wie Jethete, A286, 17-4PH, Aluminiumlegierungen wie AlCu₂MgNi, RR350, Titanlegierungen wie Ti6242, Ti64 oder Titanaluminid (TiAl). Ebenso lässt sich die Beziehung bei Ringsegmenten aus Faserverbundwerkstoffen wie CFK oder GFK anwenden. Die erfindungsgemäße Beziehung lässt zudem eine große Variation bei Schaufelteilungen zu. Beispielsweise sind Schaufelanzahlen von 10 bis 150 Schaufeln pro Ringsegment möglich.

Um eine ausreichende Stabilität des Innenrings und somit des Leitschaufelkranzes zu ermöglichen, kann bei einem gegebenen Ringaußendurchmesser eine Mindestringhöhe durch die Beziehung D_AR / H_R ≤ 37 dimensioniert werden. Das Verhältnis kann jedoch auch größer sein.

Bei einem bevorzugten Ausführungsbeispiel ist die Geometrie des Innenrings derart ausgelegt, dass dieser nach einer Entlastung eine bleibende Verformung von maximal 0,2 % aufweist. Grundsätzlich wird es jedoch bevorzugt, wenn die Ringsegmente nur elastisch verformt werden und nach der Montage spannungsfrei sind.

Ein erfindungsgemäßer Leitschaufelkranz hat eine Vielzahl von Leitschaufeln, einen erfindungsgemäßen Innenring, eine Vielzahl von in Öffnungen des Innenrings eingesetzten Lagerbuchsen zur Aufnahme von schaufelseitigen Lagerzapfen und einen Dichtungsträger zur Sicherung der Lagerbuchsen in den Öffnungen. Der Leitschaufelkranz ist einfach und wiederholbar zu montieren und zu demontieren und weist aufgrund der unmittelbar in die Öffnungen eingesetzten Lagerbuchsen eine reduzierte Teileanzahl auf.

Um die Lagerbuchsen nach einer Positionierung der Ringsegmente auf den Lagerzapfen in die Öffnungen einführen zu können, weisen die Lagerzapfen in den Öffnungen ein Spaltmaß s auf, das der Wandstärke der Lagerbuchsen entspricht. Das Spaltmaß s bzw. die Wandstärke kann nahezu beliebig reduziert werden. Insbesondere kann beim Wegfall der Lagerbuchsen, beispielsweise bei Öffnungen mit integralen Lagerflächen ein Nullspaltmaß eingestellt werden. Aus Wartungsgründen wird es jedoch bevorzugt, wenn die Lagerbuchsen als Verschleißteile einfach austauschbar sind. Zur Erreichung einer Mindeststandfestigkeit der Lagerbuchsen wird bei herkömmlichen Materialien wie durch die Relation (D_BR - D_Z) / 2 ≥ 0,30mm mit D_BR als Innendurchmesser der Öffnungen und D_Z als Außendurchmesser der Lagerzapfen ausgedrückt, eine Mindestwandstärke der Lagerbuchsen von 0,30mm bevorzugt.

Bevorzugterweise wird bei einer kleinen Ringhöhe H_R ein kleines Spaltmaß eingestellt und bei einer großen Ringhöhe H_R wird ein großes Spaltmaß angestrebt. Dabei ist es vorteilhaft, den Ringaußendurchmesser durch die Beziehung (D_AR / H_R) * s ≥ 3,60mm mit zu berücksichtigen.

Zudem ist es vorteilhaft, wenn eine Gesamthöhe der in den Öffnungen aufgenommen Schaufelabschnitte gemäß der Beziehung 0,17 ≤ H_S / H_R ≤ 1,30 zumindest nicht wesentlicher größer als die Ringhöhe ist, wobei H_S als Höhe der Lagerzapfen und die Höhe von in Erweiterungen der Öffnungen aufgenommenen schaufelseitigen Innendeckbändern repräsentiert.

Um zu verhindern, dass die Lagerzapfen zu weit aus den Öffnungen hinausragen, ist es vorteilhaft, deren Höhe in Relation zur Höhe der Innendeckbänder zu setzen, so dass bei einem Ausführungsbeispiel gilt: 1 ≤ H_Z / H_TS ≤ 6, mit H_Z als Lagerzapfenhöhe und H_TS als Innendeckbandhöhe.

Eine einfache Montage und Demontage bzgl. der Innendeckbänder sowie eine gute Dichtwirkung derselben in den Erweiterungen wird erreicht, wenn die folgende Relation Anwendung findet: 0,05mm ≤ (D_SR - D_TS) / 2 ≤ 1mm, mit D_SR als Durchmesser der Erweiterungen und D_TS Durchmesser der Innendeckbänder.

Eine erfindungsgemäße Strömungsmaschine weist einen erfindungsgemäßen Leitschaufelkranz auf und ist somit entsprechend montage- und wartungsfreundlich.

Sonstige vorteilhafte Ausführungsbeispiele der Erfindung sind Gegenstand weiterer Unteransprüche.

Im Folgenden wird ein bevorzugtes Ausführungsbeispiel der vorliegenden Erfindung näher erläutert. Es zeigen:
Figur 1 eine perspektivische Darstellung eines Abschnitts eines erfindungsgemäßen Leitschaufelkranzes,
Figur 2 eine schematische Stirnansicht eines erfindungsgemäßen Innenrings,
Figuren 3 und 4 Verfahrensschritte zur Montage des erfindungsgemäßen Leitschaufelkranzes bzw. Innenrings,
Figur 5 eine Montagvorrichtung zum Vorspannen von Ringsegmenten des Innenrings,
Figur 6 eine schematische Entlastungsbewegung eines der Ringsegmente, und
Figur 7 eine Detaildarstellung aus Figur 1.

In den Figuren werden für gleiche konstruktive Elemente gleiche Bezugszeichen verwendet, wobei bei mehreren gleichen konstruktiven Elementen in einer Figur lediglich ein Element mit einem Bezugszeichen versehen ist.

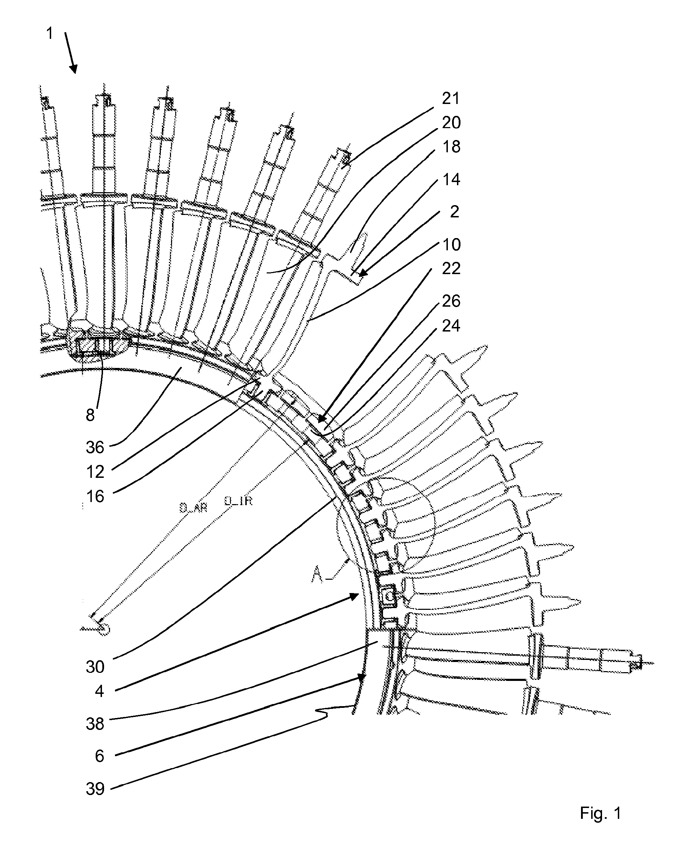

Gemäß der perspektivischen Darstellung in Figur 1 hat ein erfindungsgemäßer Leitschaufelkranzes 1 eines Flugzeugtriebes eine Vielzahl von Leitschaufeln 2, einen Innenring 4, einen Dichtungsträger 6 und eine Vielzahl von Lagerbuchsen 8. Der Leitschaufelkranz 1 wird verdichterseitig angeordnet und weist beispielseise bis zu 300 Leitschaufeln auf.

Die Leitschaufeln 2 sind um ihre sich in radialer Richtung erstreckende Hochachse verstellbar und haben jeweils ein Schaufelblatt 10, ein Innendeckband 12, ein Außendeckband 14, einen inneren Lagerzapfen 16 sowie einen äußeren Verstellzapfen 18. Die Deckbänder 12, 14 dienen zur radialen Abdichtung eines heißgasstromseitigen Ringraums 20. Die Lagerzapfen 16 und die Verstellzapfen 18 dienen zur endseitigen Lagerung der Leitschaufeln 2. Die Verstellung der Leitschaufeln 2 erfolgt durch eine mit den Verstellzapfen 18 zusammenwirkende gehäuseseitige Verstelleineinrichtung, von denen lediglich auf den Verstellzapfen 18 geführte griffartige Hammerköpfe 21 gezeigt sind.

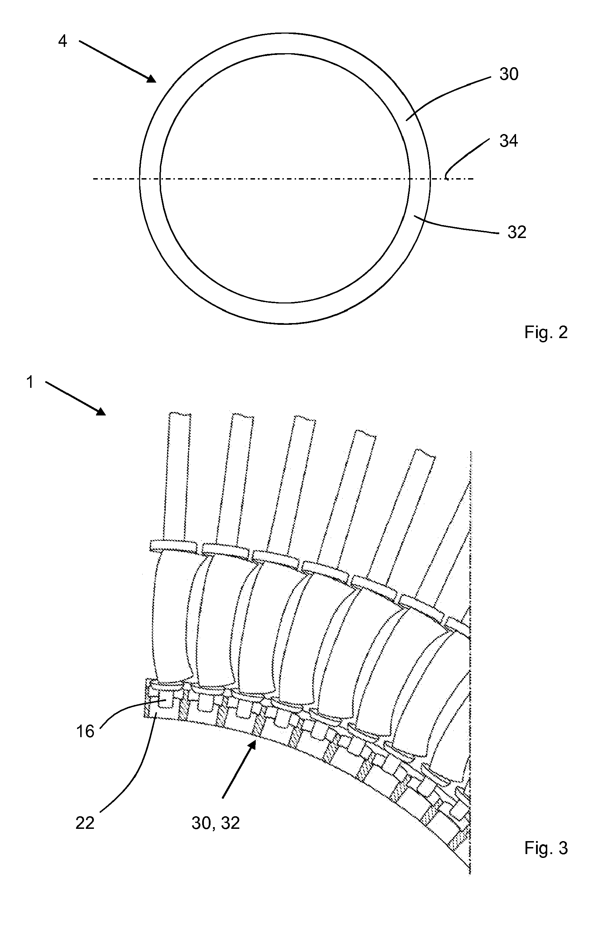

Der erfindungsgemäße Innenring 4 umgreift einen nicht gezeigten Rotorabschnitt und ist von diesem über einen Radialspalt radial beabstandet. Er dient zur radial inneren Stützung der Leitschaufeln 2 und hat eine Vielzahl von umfangsseitig geschlossenen Öffnungen 22. Die Öffnungen 22 sind bohrungsartig ausgebildet und durchsetzen den Innenring 4 in radialer Richtung. Sie haben jeweils einen radial innenliegenden Lagerabschnitt 24 und eine radial außenliegende Erweiterung 26. Wie schematisch in Figur 2 gezeigt, besteht der Innenring 4 aus zwei halbkreisförmigen Ringsegmenten 30, 32 mit jeweils einem Bogenabschnitt von 180°, die im Bereich einer Trennebene 34 zum Innenring 4 zusammengesetzt sind. Selbstverständlich ist jedoch auch eine stärke Segmentierung des Innenrings 4 bspw. in vier Ringsegmente möglich.

Der Dichtungsträger 6 dient zur Sicherung der Lagerbuchsen 8 in den Öffnungen 22 und zur Abdichtung des Radialspaltes zwischen dem Rotor und dem Innenring 4. Er ist wie in Figur 1 gezeigt radial innenliegend auf den Innenring 4 geschoben und weist analog zum Innenring 4 zwei halbkreisförmige Trägersegmente 36, 38 auf. Zur Abdichtung des Radialspaltes ist an einer dem Rotor zugewandten Innenumfangsfläche 39 ist ein nicht gezeigter Einlaufbelag bspw. in Form einer Honigwabendichtung angeordnet.

Die Lagerbuchsen 8 sind in den Lagerabschnitten 24 der Öffnungen 22 eingesetzt und dienen zur radialen Führung der Lagerzapfen 16.

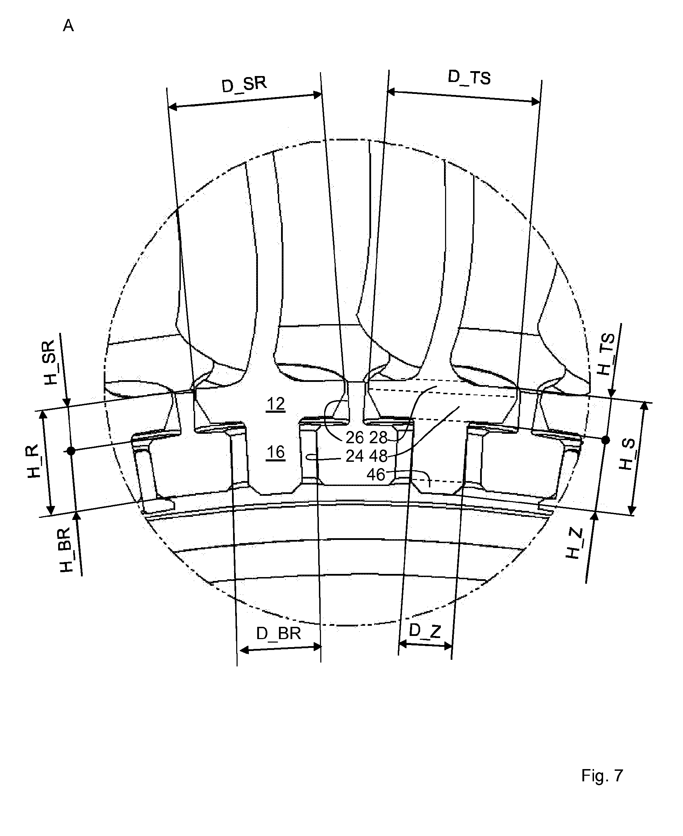

Im montierten Zustand des Leitschaufelkranzes 1 tauchen die Leitschaufeln 2 mit ihren Lagerzapfen 16 in die Lagerabschnitte 24 ein und werden in diesen radial durch die Lagerbuchsen 8 geführt. Gleichzeitig tauchen die Leitschaufeln 2 mit ihren Innendeckbändern 12 in die Erweiterungen 26 ein und dichten diese über einen Zylinderabschnitt 28 (vgl. Fig. 7) gegenüber dem Ringraum 20 ab bzw. nahezu ab.

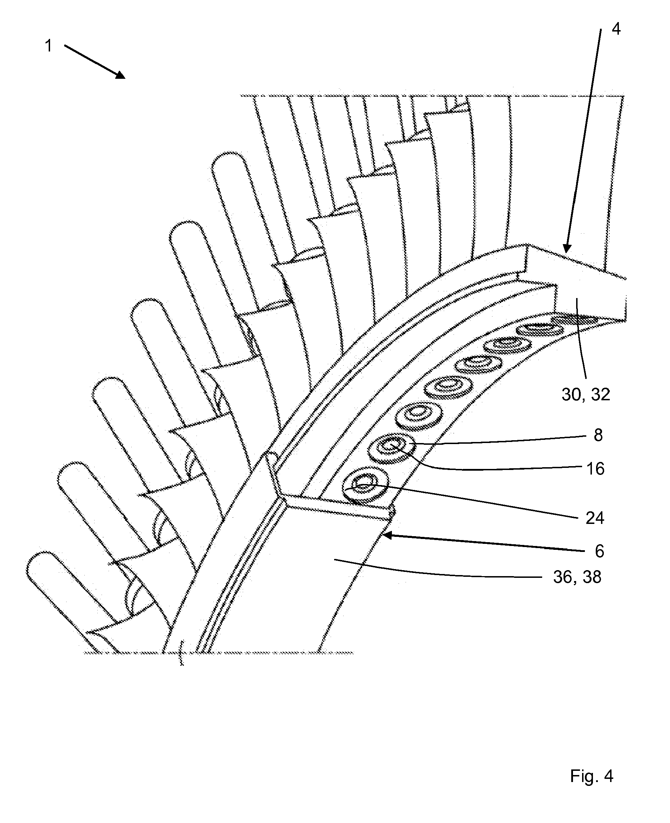

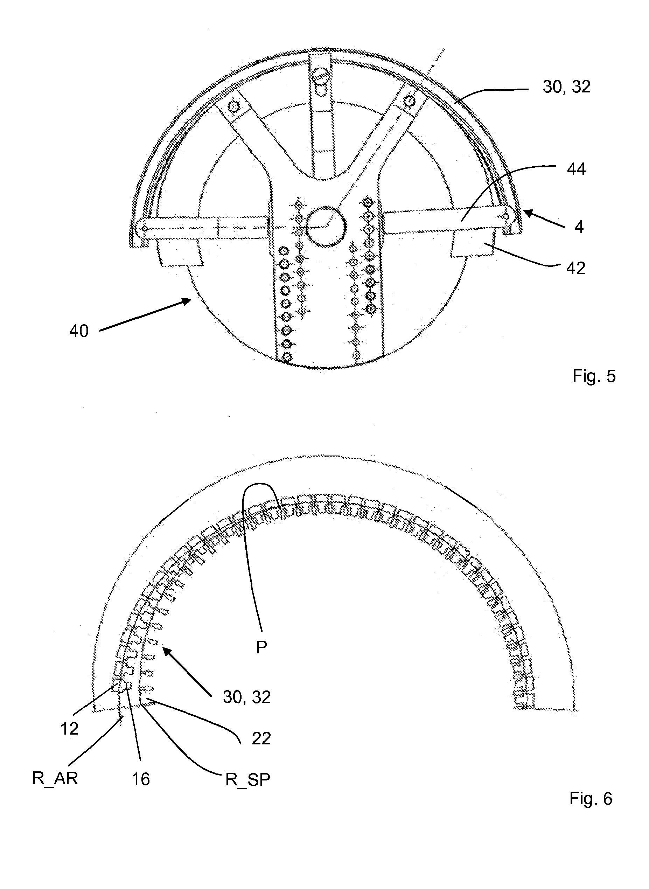

Bei einer Montage des Leitschaufelkranzes 1 werden wie in Figur 3 angedeutet die Ringsegment 30, 32 des Innenrings 4 nicht zeitgleich über alle Lagerzapfen 16 geschoben, sondern zeitlich nacheinander über den Umfang fortschreitend. Die Ringsegmente 30, 32 haben einen in Figur 6 gezeigten Außenradius R_AR, der durch Vorspannung auf einen ebenfalls in Figur 6 skizzierten konstanten Spannradius R_SP reduziert wird. Bei einer sich anschließenden Entlastung entspannen sich die Ringsegmente 30, 32 und rollen über den Lagerzapfen 16 ab. Dabei kann der Außenradius R_AR der Ringsegmente 30, 32 durch allmähliche Reduktion der Vorspannung stufenlos oder durch gestufte Reduktion schrittweise bis zum entspannten Zustand vergrößert werden. Nach der Entlastung der Ringsegmente 30, 32 werden wie in Fig. 4 gezeigt die Lagerbuchsen 8 durch eine Bewegung radial von innen nach außen in den Lagerabschnitten 24 positioniert. Anschließend wird der Dichtungsträger 6 montiert. Hierzu werden die Trägersegmente 36, 38 in Umfangsrichtung über die Ringsegmente 30, 32 bewegt, bis sich die Trägersegmente 36, 38 und die Ringsegmente 30, 32 überdecken und in gleicher Winkelposition zueinander stehen.

Eine Montagevorrichtung 40 zur Montage der Ringsegmente 30, 32 ist in Figur 5 gezeigt. Sie hat einen halbkreisförmigen Spannabschnitt 42 bzw. eine Kulisse und drei Spannarme 44 zum Vorspannen der Ringsegmente 30, 32 auf dem Spannabschnitt 42. Wie schematisch in Figur 6 gezeigt, in der aus Gründen der Übersichtlichkeit die Radien R_RA und R_SP als Bogenlinien dargestellt sind, werden die Ringsegmente 30, 32 durch eine Entlastung der Spannarme 44 über den Lagerzapfen 16 der Leitschaufeln 2 abgerollt. Die geometrischen Bedingungen des Leitschaufelkranzes 1 sind dabei derart, dass die Öffnungen 22 der Ringsegmente 30, 32 ohne Verkanten oder Verklemmen über die Lagerzapfen 16 und die Innendeckbänder 12 bewegt werden. Dabei wechselt der Außenradius R_AR der Ringsegmente 30, 32 am tangentialen Berührungspunkt P ohne Übergang vom konstanten Spannradius R_SP unmittelbar auf den ursprünglichen Außenradius R-AR. Während also das eine Hypozykloidenbewegung darstellende Abrollen der Ringsegmente 30, 32 kontinuierlich erfolgt, vollführt der Außenradius R_AR der Ringsegmente 30, 32 an dem mitlaufenden tangentialen Berührungspunkt P einen Krümmungssprung vom Spannradius R_SP auf seinen Außenradius R_AR. Zur Ermöglichung einer derartigen Montage und Demontage haben die Ringsegmente 30, 32 bestimmte geometrische bzw. typologische Bedingungen zu erfüllen, die im Folgenden anhand der Figuren 1 und 7 näher erläutert werden:
Der Innenring 4 hat einen Innendurchmesser D_IR, einen Außendurchmesser D_AR, der dem zweifachen Wert des Außenradius R_AR entspricht, und eine Höhe H_R, die durch die Gleichung H_R = (D_AR - D_IR) / 2 in Beziehung miteinander stehen. Das Verhältnis des Ringaußendurchmessers D_AR zur Ringhöhe H_R unter Berücksichtigung des Ringwerkstoffes stellt eine wesentliche Bedeutung für seine Verformbarkeit dar. Beispielhafte Ringwerkstoffe sind Inco718, In625, Chromnickelstähle wie Jethete, A286, 17-4PH, Aluminiumlegierungen wie Al-Cu₂MgNi, RR350, Titanlegierungen wie Ti6242, Ti64 oder Titanaluminid (TiAl) sind. Zumindest für diese und für Werkstoffe bzw. Legierungen mit analogen Festigkeitswerten gilt zur Definitioneiner maximalen Ringhöhe H_R bei einem konstanten Ringaußendurchmesser D_AR die Relation: 12 ≤ D_AR / H_R. Zur Definition einer Mindestringhöhe H_R bei einem konstanten Ringaußendurchmesser D_AR gilt die Relation: D_AR / H_R ≤ 37. Insbesondere gilt die Beziehung 15 ≤ D_AR / H_R ≤ 37. Bevorzugte Ringaußendurchmesser D_AR liegen in einem Bereich zwischen 180mm und 314mm. Bevorzugte Ringhöhen H_R liegen in einem Bereich von 8mm bis 10,50mm. Insbesondere wird es bevorzugt, wenn das Verhältnis des Ringaußendurchmessers D_AR zur Ringhöhe H_R zudem derart gewählt wird, dass die Ringsegmente 30, 32 und somit der Innenring 4 beim Montieren lediglich elastisch verformt wird und nach seiner Entlastung keine plastische Verformung aufweist und somit spannungsfrei ist. Es kann das Verhältnis jedoch auch so gewählt werden, dass zwar beim Montieren eine plastische Verformung der Ringsegmente 30, 32 erfolgt, diese jedoch nach der Endmontage wieder ihre unverformte Ursprungsform einnehmen, also quasi während der Montage der Lagerbuchsen 8 und des Dichtungsträgers 6 rückverformt werden. Jedoch sollte zur Vermeidung einer Schädigung der Ringsegmente 30, 32 diese plastische Verformung nicht zu groß sein. In Untersuchungen konnte eine plastische Dehnung der Ringsegmente 30, 32 bis zur 0,2%-Dehngrenze aus Montagesicht und strukturmechanischer Sicht akzeptiert werden.

Weitere Paramater neben dem Ringaußendurchmesser D_AR, dem Ringinnendurchmesser D_IR und der Ringhöhe H_R zur Beeinflussung einer Montage des Innenrings 4 sind wie in Figur 7 gezeigt zumindest ein Lagerzapfendurchmesser D_Z, eine Lagerzapfenhöhe H_Z, ein Durchmesser D_BR des öffnungsseitigen Lagerabschnitts 24, eine Höhe H_BR des Lagerabschnitts 24, ein Innendeckbanddurchmesser D_TS, eine Innendeckbandhöhe H_TS, ein Durchmesser D_SR der öffnungsseitigen Erweiterung 26, eine Höhe H_SR der Erweiterung 26 und eine Gesamthöhe H_S über den Lagerzapfen 16 und die Erweiterung 26.

Vorteilhafterweise sind die Lagerzapfen 1 mit einem radialen Spaltmaß s = (D_BR -D_Z) / 2 in den Öffnungen 22 aufgenommen, das der Wandstärke der Lagerbuchsen 8 entspricht. Dabei hat sich gezeigt, dass bei einer Verwendung von herkömmlichen Lagerbuchsenwerkstoffen eine Mindestwandstärke von 0,30mm möglich ist, so das gilt: (D_BR -D_Z) / 2 ≥ 0,30mm. Diese Beziehung zeigt zudem, dass bei einer Vergrößerung der Lagerbuchsenwandstärke entweder beide Durchmesser D_BR und D_Z verändert werden können oder nur einer der Durchmesser D_BR, D_Z einzustellen ist. Sollen zum Beispiel Lagerbuchsen 8 mit bevorzugten Wandstärken von 1,45mm bis 1,5mm eingesetzt werden, so ist das Spaltmaß s durch eine Vergrößerung des Durchmessers D_BR des öffnungsseitigen Lagerabschnitts 24 oder durch eine Verkleinerung des Lagerzapfendurchmesser D_Z einstellbar.

Bevorzugterweise weist der Innenring 4 bei einer kleinen Ringhöhe H_R ein kleines Spaltmaß s auf. Entsprechend weist der Innenringe 4 bei einer großen Ringhöhe H_R ein großes Spaltmaß s auf. Dabei ist es vorteilhaft, wenn zudem der Ringaußendurchmesser D_AR gemäß der Beziehung (D_AR / H_R) * s ≥ 3,60mm mitberücksichtigt wird.

Grundsätzlich wird es bevorzugt, wenn die in den Öffnungen 22 aufgenommen Schaufelabschnitte 12, 16 eine Gesamthöhe H_S haben, die der Ringhöhe H_R entspricht. Zwar kann auch die Ringhöhe H_R gegenüber der Gesamthöhe H_S vergrößert sein, jedoch sollte wie durch die Beziehung 0,17 ≤ H_S / H_R ≤ 1,30 ausgedrückt die Gesamthöhe H_S vornehmlich kleiner als die Ringhöhe H_R sein. Dabei ist es insbesondere vorteilhaft, wenn eine Lagerzapfenhöhe H_Z maximal 6mal so groß ist wie eine Innendeckbandhöhe H_SR ist, so das gilt: 1 ≤ H_Z / H_TS ≤ 6. Hierdurch wird vermieden, dass die Lagerzapfen 16 mit ihren freien Endabschnitten innenumfangsseitig weit aus den Lagerabschnitten 24 der Öffnungen 22 hinausragen, was unter anderem Modifikationen des Dichtungsträgers 6 erfordern würde. Bevorzugterweise entspricht die Höhe H_Z der Lagerzapfen 16 einer Höhe H_BR des Lagerabschnitts 24, so dass wie in Figur 7 gezeigt die Lagerzapfen 16 lediglich mit einem kurzen nicht tragenden angefasten Endabschnitt 46 aus dem Lagerabschnitt 24 hinausragen.

Die Innendeckbänder 12 haben einen neben den radial außenliegenden Zylinderabschnitt 28 mit einem Durchmesser D_TS zur Abdichtung des Ringraums 20 einen radial innenliegenden konischen Abschnitt 48 mit einem Konuswinkel zur Vereinfachung der Montage. Vorzugsweise nimmt der Konuswinkel bei steigendem Außendurchmesser D_TS zu. Zur Abdichtung des Ringraums 20 und zur Gewährleistung einer reibungsarmen Verstellung der Leitschaufeln 2 wird es jedoch bevorzugt, wenn die Zylinderabschnitte 28 einen Radius haben, der um minimal 0,05mm kleiner ist als ein Radius der Erweiterungen 26. Allerdings sollte der Abdichtung halber der Innendeckbandradius den Erweiterungsradius nicht um mehr als 1mm übersteigen, so dass bevorzugterweise gilt: 0,05mm ≤ (D_SR - D_TS) / 2 ≤ 1mm.

Offenbart ist ein Innenring zur Bildung eines Leitschaufelkranzes für eine Strömungsmaschine, der aus zumindest zwei einteiligen Ringsegmenten mit einer Vielzahl von umfangsseitig geschlossenen Öffnungen zur Aufnahme von schaufelseitigen Lagerzapfen zusammengesetzt ist und dessen Außendurchmesser mindestens 12 mal so groß wie seine Höhe ist, sowie ein Leitschaufelkranz mit einem derartigen Innenring und einer Strömungsmaschine mit einem derartigen Leitschaufelkranz.

### Bezugszeichenliste

- 1: Leitschaufelkranz
- 2: Leitschaufeln
- 4: Innenring
- 6: Dichtungsträger
- 8: Lagerbuchsen
- 10: Schaufelblatt
- 12: Innendeckband
- 14: Außendeckband
- 16: Lagerzapfen
- 18: Verstellzapfen
- 20: Ringraum
- 21: Hammerkopf
- 22: Öffnung
- 24: Lagerabschnitt
- 26: Erweiterung
- 28: Zylinderabschnitt
- 30: Ringsegment
- 32: Ringsegment
- 34: Trennebene
- 36: Trägersegment
- 38: Trägersegment
- 39: Innenumfangsfläche
- 40: Montagevorrichtung
- 42: Spannabschnitt
- 44: Spannarm
- 46: Endabschnitt
- 48: konischer Abschnitt
- R_AR: Außenradius Innenring
- R_SP: Spannradius
- P: Berührungspunkt
- D**_**IR: Innendurchmesser Innenring
- D_AR: Außendurchmesser Innenring
- H_R: Höhe Innenring
- D_Z: Durchmesser Lagerzapfen
- H_Z: Höhe Lagerzapfen
- D_BR: Durchmesser Lagerabschnitt der Öffnung
- H_BR: Höhe Lagerabschnitt der Öffnung
- D_TS: Durchmesser Innendeckband
- H_TS: Höhe Innendeckband
- D_SR: Durchmesser Erweiterung der Öffnung
- H_S: Summe Höhe Lagerzapfen und Höhe Innendeckband

## Patentansprüche

1. Innenring (4) zur Bildung eines Leitschaufelkranzes (1) für eine Strömungsmaschine mit einer Vielzahl von Leitschaufeln (2), der einen Außendurchmesser (D_AR) und eine Höhe (H_R) hat und der sich aus mindestens zwei Ringsegmenten (30, 32) zusammensetzt, die eine Vielzahl von umfangsseitig geschlossenen Öffnungen (22) zur Aufnahme von Lagerzapfen (16) der Leitschaufeln (2) aufweisen, **dadurch gekennzeichnet, dass** die Beziehung gilt: D_AR / H_R ≥ 12.

2. Innenring nach Anspruch 1, wobei die Beziehung gilt: D_AR / H_R ≤ 37.

3. Innenring nach Anspruch 1 oder 2, wobei dieser nach einer Entlastung eine bleibende Verformung von maximal 0,2% aufweist.

4. Leitschaufelkranz (1) mit einer Vielzahl von Leitschaufeln (2), einem Innenring (4) nach einem der vorhergehenden Ansprüche, einer Vielzahl von in Öffnungen (22) des Innenrings (4) eingesetzten Lagerbuchsen (8) zur Führung von Lagerzapfen (16) der Leitschaufeln (2) und mit einem Dichtungsträger (6) zur Sicherung der Lagerbuchsen (8) in den Öffnungen (22).

5. Leitschaufelkranz nach Anspruch 4, wobei die Beziehung gilt: (D_BR - D_Z)/2 ≥ 0,30mm mit (D_BR) als Innendurchmesser der Öffnungen (22) und mit (D_Z) als Außendurchmesser der Lagerzapfen (16).

6. Leitschaufelkranz nach Anspruch 4 oder 5, wobei die Beziehung gilt: (D_A / H_R) * s ≥ 3,60mm mit s als (D_BR - D_Z) / 2.

7. Leitschaufelkranz Anspruch 4, 5 oder 6, wobei die Beziehung gilt: 0,17 ≤ H_S / H_R ≤ 1,30 mit (H_S) als Höhe der Lagerzapfen (16) und in radialen Erweiterungen (26) der Öffnungen (22) aufgenommenen schaufelseitigen Innendeckbändern (12).

8. Leitschaufelkranz nach einem der Ansprüche 4 bis 7, wobei die Beziehung gilt: 1≤ H_Z / H_TS ≤ 6 mit (H_Z) als Höhe der Lagerzapfen (16) und (H_TS) als Höhe der Innendeckbänder (12).

9. Leitschaufelkranz nach einem der Ansprüche 4 bis 8, wobei die Beziehung gilt: 0,05 mm ≤ (D_SR - D_TS) / 2 ≤1mm mit (D_SR) als Innendurchmesser der Erweiterungen (26) und (D_TS) als Durchmesser der Innendeckbänder (12).

10. Strömungsmaschine mit einem Leitschaufelkranz (1) nach einem der Ansprüche 4 bis 8.
